# EUROPEAN PATENT SPECIFICATION

(11) **EP 2 041 418 B1**
(45) Date of publication and mention of the grant of the patent: **20.01.2010**
(21) Application number: 06724621.5
(22) Date of filing: 28.04.2006
(51) Int. Cl.: F02F 7/00, F16M 1/025

(54) **MAIN BEARING SUPPORT FOR A LARGE TWO-STROKE DIESEL ENGINE**
HAUPTLAGERTRÄGER FÜR EINEN GROSSEN ZWEITAKT-DIESELMOTOR
SUPPORT DE PALIERS PRINCIPAUX POUR GRAND MOTEUR DIESEL A DEUX TEMPS

(43) Date of publication of application: 01.04.2009
(73) Proprietor: Man Diesel A/S, 2450 Copenhagen SV (DK)
(72) Inventor: LUNDH, Flemming, 2820 Gentofte (DK)
(74) Representative: Nordic Patent Service
(86) International application number: PCT/EP2006/003947
(87) International publication number: WO 2007/124764

(56) References cited:
- US-A- 1 864 004
- US-A- 2 045 493

## Description

### FIELD OF THE INVENTION

The present invention relates to a main bearing support for a large two-stroke diesel engine of the cross-head type, and to a method for manufacturing such a main bearing support.

### BACKGROUND OF THE INVENTION

Large two-stroke diesel engines of the cross-head type, as for example used for propulsion of large oceangoing vessels or as primary mover in a power plant include three main housing parts. Seen from the bottom up, these parts are the so-called bed plate, the frame box and the cylinder frame. These three housing parts are held together by stay bolts. The main bearings for the crankshaft are arranged in the bedplate.

The bedplate of prior art engines consists of high, welded, longitudinal girders and welded cross girders with cast steel bearing supports, i.e. the bedplate is a completely welded construction made from rolled metal plate material except for the bearing supports. The cross girders consist of two webplates with a cast main bearing support welded therebetween.

The main bearing support carries a thin bottom bearing shell lined with bearing metal. The stay bolts are anchored in threaded bores that are disposed at opposite sides of the bearing/crankshaft in top of the main bearing supports.

Significant increases of the maximum combustion pressure in the recent past have led to a significant increase in the downward force applied by the crankshaft on the main bearings, and of the upward force applied by the stay bolts to the top of the main bearing supports. There can be one or a set of two staybolts on either side of the main bearing attached to a main bearing support.

In order to arrive at an acceptable pressure level in the oil film of the slide type main bearings with these high forces, the width (the extension of the bearing shell in the direction of the longitudinal axis of the crankshaft) of the bearing shells must be considerable, and therefore the width or thickness of the main bearing support needs to be equally large. The large forces applied by the stay bolts at the opposite sides of the main bearing to the top of the main bearing support tend to deform the main bearing support. This deformation has to be kept below an acceptable level which means that the main bearing support has to be dimensioned accordingly with high material thickness.

Downwardly from the wide/thick area just below the main bearing, the main bearing support includes a plate like portion extending to the bottom of the bedplate, and this plate like portion is therefore also made by casting.

After the bedplate has been welded together, a first machining operation is performed to fulfill the exact requirements for the very precise geometry, in particularly of the main bearings. This machining procedure includes the arc shaped surface (called main bearing saddle) of the main bearing support on which the lower bearing shell is to be placed, the side surfaces that adjoin the arc shaped surface of the main bearing support and the top surface of the main bearing support. After the main bearing cap has been mounted and the taps have been tightened a second machining of both the main bearing support and the main bearing cap is performed. This operation includes boring through the min bearing cap and the main bearing support at the future position of the main bearing to obtain the final diameter and tolerance.

The dimensions of the main bearing supports of large two-stroke diesel engines are enormous. For example, in an engine with a 108 cm cylinder bore, the main bearing support can be more than three meter high and more than two meter wide with a highest thickness that can be nearly 0,5 meter. The big portal milling machine, a so-called planomiller, on which the machining operation is performed is equally large, and expensive. Engine manufacturing plants often have only one of these big portal milling machines and the milling process of these an other large engine components is therefore often a bottleneck in the production.

Cast components will always have casting imperfections, such as inclusions, impurities and air pockets. Prior and after welding in and machining the main bearing support, the main bearing support is inspected. The inspection is visual, but involves also ultrasonic tests as well as magnetic particle tests. If the amounts and sizes of the casting imperfections are inside the specified criteria, the main bearing support is accepted. However, especially after machining of the bearing saddle, air pockets may be visible as holes. When this happens, it can be necessary to fill the pockets by welding, followed by machining and heat treatment, so-called weld reparations. However, the repaired portions of the main bearing support (Heat affected Zones, HAZ), will even after a heat treatment be harder than the rest of the main bearing support, which affects the relatively thin bearing shells that rest on the main bearing support, due to the higher hardness of the heat affected zone. Above weld reparation is often needed because the relatively thin bearing shell need full support at its back, due to the enormous pressure exerted from the crankshaft. This is necessary if the area of the hole is too big due to too large radial and axial dimensions. In general, it is desirable to have as even as possible properties for the material of the main bearing support, in particular of the surface that supports the thin bearing shells. Therefore, reparation of casting imperfections is undesirable, but for economic reasons a main bearing support with relatively few casting imperfections is not discarded.

### OBJECT OF THE INVENTION

It is an object of the present invention to provide a main bearing support for a large two-stroke diesel engine that overcomes or at least reduces the drawbacks set out above.

### DISCLOSURE OF THE INVENTION

This object is achieved in accordance with claim 1 by providing a large two-stroke diesel engine of the crosshead type comprising a bedplate, a frame box mounted on the bedplate, a cylinder frame mounted on the frame box, a crankshaft resting in main bearings, wherein the bedplate is provided with a plurality of cross girders, at least some of said cross girders comprise one or more webplates and a main bearing support connected to the one or more webplates by welds, said main bearing support including a rolled steel slab or plate with an arc shaped support surface for carrying the lower bearing shells thereon.

There is a prejudice in the art, according to which the thick main bearing supports can only be manufactured by casting, especially since there are many curved surfaces in the traditional main bearing support design. However, the inventors of the present invention arrived at the insight that the thick bearing support can be manufactured from a slab or plate of rolled steel material. The amount of inclusions, air pockets and other impurities that are often present in cast steel products, is reduced considerably by using rolled steel. Thus, the amount of reparations that need to be carried out on the main bearing supports is significantly reduced. The main bearing supports must be machined by a milling machine after the reparations, and therefore the amount of time that the main bearing supports occupy on the bottleneck creating planomiller is reduced. The reduced amount of inclusions, air pockets and other impurities has also a beneficial effect on the strength characteristics of the main bearing support. This is particularly important since the bearing shells of the main bearings with large loads from rotating and oscillating masses rest on the main bearing support. Due to the rolled structure of the plate, possible air pockets will only have a small length axially, which after machining may reveal a hole, which in area is so small that no filling-up with welding is needed. Only smoothening of sharp edges is required.

The thickness of the cast bearing supports fluctuates. However, it is necessary to establish the specified width of the main bearing support in order to achieve full support of the thin bearing shells. Therefore, it is necessary to cast the main bearing support with an oversize axial thickness followed by machining to the specified width. This is performed by machining the front and rear sides (the axially facing surfaces) on that adjoin to the arc shaped support surface on the large milling. Since the thickness of steel plates or slabs is very stable, the front and side surfaces of a main bearing support formed in rolled steel plate or slab material is not required, thereby even further reducing the amount of time that the main bearing supports need to spend on the bottleneck creating large planomiller. It does not affect the performance of the bearing if the sides of the bearing shell and the bearing saddle not are completely aligned. In fact it is allowed the shell to protrude a distance of approximately half a shell thickness from the side of the bearing saddle. This circumstance combined with the fact that the thickness of steel plates is better controlled than the thickness of the cast structure, explains why machining of the front and rear faces of the steel plate bearing support can be avoided.

The axial position of the lower shell relative to the main bearing support is realized during the machining operation of the bedplate, where two position holes for pins are made. The pins are pressed in the main bearing support prior to mounting the lower shell. The lower shell has grooves which fit the above pins.

The main bearing support can be machined from a single solid slab or plate, thus resulting a in an extremely rugged main bearing support.

Preferably, the slab or plate has an upper side that is provided with a recess at the bottom of which said arc shaped support surface is disposed, an oppositely disposed front and rear side and one or more attachment sides that are connected to the one or more webplates.

The one or more attachment sides may extend along substantially straight lines, which makes the bearing support easier to manufacture.

Preferably, at least a peripheral portion of the front side and the rear side tapers towards the one or more attachment sides. The tapered portions provide for a smooth force transition from the main bearing support to the webplates and keep notch factor at the transition between the main bearing support and the webplates at an acceptable level.

The nonperipheral portion of the front side and the rear side can be substantially planar, with a sharp transition between the planar portion and the tapered portion of the front and rear side. A sharp transition is easier to manufacture than a smooth, round transition.

Preferably, the welds between the slab or plate and the webplates are K- or X-welds. The welds between the webplates and the slab or plate should preferably be carried out such that the steel is molten over the complete thickness of the webplates.

Two of the attachment sides may extend substantially vertically, and two further attachment sides may slant downwardly towards one another from the lower ends of the two vertically extending attachment sides. Thus, the contour of the slab or plate is relatively simple and easy to manufacture. Consequently, also the contour of the sides of the webplates that are connected to the main bearing support is easy to manufacture and it is easy to accurately match the contour of the main bearing support precisely to the contour of the webplates. The slanting attachment sides may meet one another.

The object above is also achieved by providing a method for manufacturing a cross girder of a bedplate of a large two-stroke diesel engine of the cross-head type according to claim 9, comprising the steps of: providing a rolled steel slab or plate, machining an arc shaped support surface in said slab or plate for carrying a lower shell of the main bearings of the engine, providing one or more webplates, and connecting the slab or plate to said one or more webplates by welding.

By manufacturing the cross girders without any cast components, costly molds can be avoided. Further, the amount of time required for manufacturing a cross girder is reduced since the time consumption for preparing the mold and for cooling of the newly cast main bearing support can be avoided. Further, the use of a welded steel plate main bearing support enables a flexible production process with short delivery times and fast realization of geometrical changes of the main bearing support.

The method may also comprise the step of cutting at least a portion of the contour of said plate or slab by flame cutting or by abrasive jet machining. Both of these two types of machining operations are relatively cheap and fast, thereby further reducing the manufacturing costs of the engine.

Preferably, the method comprises the step of creating tapered portions in the peripheral area of the sides of the slab or plate that are connected to the webplates.

The contour of the tapered portions can be created by flame cutting or by abrasive jet machining.

The method may comprise the step of providing the steel slab or plate rolled to a thickness, which corresponds to the width of the shells. Thus, the side surface that adjoins the bearing saddle that carries the lower bearing shell does not need to be machined. This means than one manufacturing step on the large planomiller can be saved, whereas the prior art cast main bearing supports need to be precision machined to obtain the correct width for the arc shaped surface that supports the lower bearing shell.

Further objects, features, advantages and properties of the large two-stroke diesel engine and method of producing a cross girder for the bedplate of a large two-stroke diesel engine according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which:
Fig. 1 is a cross-sectional view of an engine according to the present invention,
Fig. 2 is a longitudinal-sectional view of one cylinder section of the engine shown in Fig. 1,
Fig. 3 is a perspective view on a section of the bedplate of the engine shown in Fig. 1,
Fig. 4 is a side view on a cross girder of the bedplate shown in Fig. 3,
Fig. 5 is a detailed side view on a main bearing support in the cross girder shown in Fig. 4,
Fig. 5A is a cross-sectional view on the line A-A' in Fig. 5,
Fig. 5B is a cross-sectional view on the line B-B' in Fig. 5,
Fig. 6 is a side view on the long side of an alternative embodiment of the main bearing support according to the invention,
Fig. 6A is a side view on the short side of the main bearing support of Fig. 6,
Fig. 7 is a side view on the long side of another alternative embodiment of the main bearing support according to the invention,
Fig. 7A is a side view on the short side of the main bearing support of Fig. 7, and
Fig. 8 is a side view on the on the long side of yet another alternative embodiment of the main bearing support according to the invention.

### DETAILED DESCRIPTION OF PREFERRED EMBODIMENTS

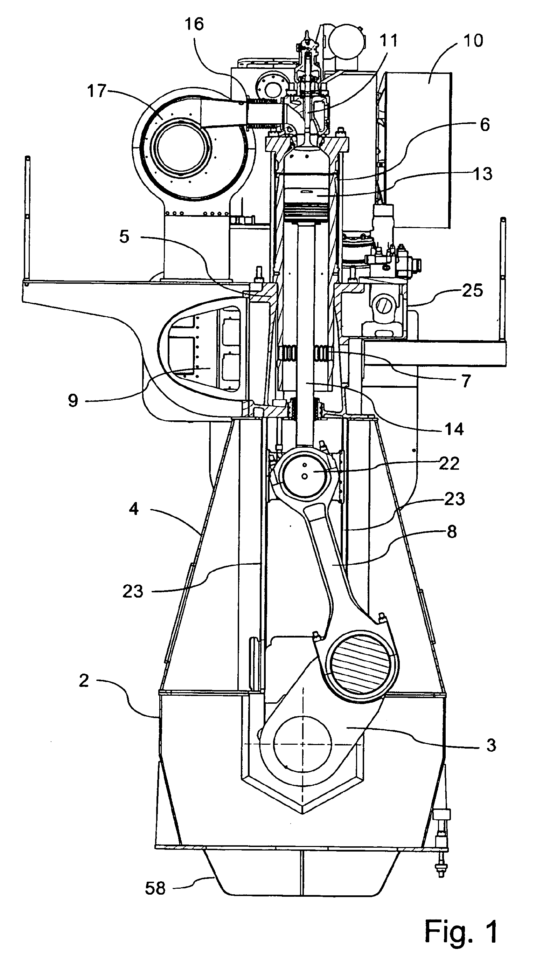

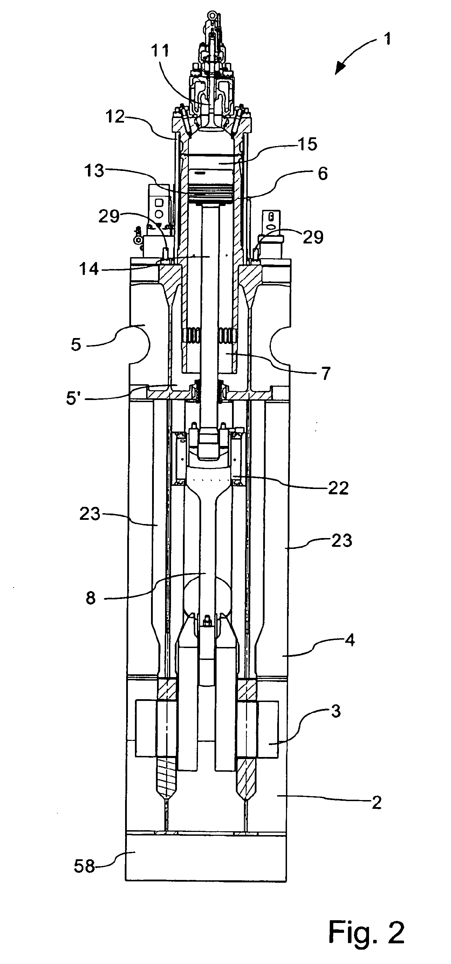

Fig. 1 and 2 show an engine 1 according to a preferred embodiment of the invention in cross-sectional view and longitudinal-sectional view (for one cylinder) respectively. The engine 1 is a uniflow low-speed two-stroke crosshead diesel engine of the crosshead type, which may be a propulsion system in a ship or a prime mover in a power plant. These engines have typically from 3 up to 14 cylinders in line. The engine 1 is built up from a bedplate 2 with the main bearings for the crankshaft 3.

The crankshaft 3 is of the semi-built type. The semi-built type is made from forged or cast steel throws that are connected with the main journals by shrink fit connections.

The bedplate 2 can be made in one part or be divided into sections of suitable size in accordance with production facilities. The bedplate consists of side walls and and welded cross girders with bearing supports. The cross girders are in the art also referred to as "transverse girders". The oil pan 58, which is welded to the bottom of the bedplate 2, collects the return oil from the forced lubricating and cooling oil system.

The connecting rods 8 connect the crankshaft 3 to the crosshead bearing 22. The crosshead bearings 22 are guided between vertical guide planes 23.

A welded design A-shaped frame box 4 is mounted on the bedplate 2. The frame box 4 is a welded design. On the exhaust side, it is provided with relief valves for each cylinder while, on the camshaft side, it is provided with a large hinged door for each cylinder. The crosshead guide planes 23 are integrated in the frame box 4.

A cylinder frame 5 is mounted on top of the frame box 4. Staybolts 29 connect the bedplate 2, the frame box 4 and the cylinder frame 5 and keep the structure together. The staybolts 29 are tightened with hydraulic jacks.

The cylinder frame 5 is cast in one or more pieces eventually with an integrated camshaft housing 25, or it is a welded design. According to a variation (not shown) of this embodiment, the exhaust valve actuation is electronically controlled, and there is neither a camshaft 28 nor a camshaft housing 25.

The cylinder frame 5 is provided with access covers for cleaning the scavenge air space and for inspection of scavenge ports and piston rings from the camshaft side. Together with the cylinder liner 6 it forms the scavenge air space. The scavenge air receiver 9, is bolted with its open side to the cylinder frame 5. At the bottom of the cylinder frame there is a piston rod stuffing box, which is provided with sealing rings for scavenge air, and with oil scraper rings which prevent exhaust products to penetrate into the space of the frame box 4 and the bedplate 2 and in this way protects all the bearings which are present in this space.

The piston 13 includes a piston crown and piston skirt. The piston crown is made of heat-resistant steel and has four ring grooves which are hard-chrome plated on both the upper and lower surfaces of the grooves.

The piston rod 14 is connected to the crosshead 22 with four screws. The piston rod 14 has two coaxial bores (not visible in the drawings) which, in conjunction with a cooling oil pipe, forms the inlet and outlet for cooling oil for the piston 13.

The cylinder liners 6 are carried by the cylinder frame 5. The cylinder liners 6 are made of alloyed cast iron and are suspended in the cylinder frame 5 by means of a low situated flange. The uppermost part of the liner is surrounded by cast iron cooling jacket. The cylinder liners 6 have drilled holes (not shown) for cylinder lubrication.

The cylinders are of the uniflow type and has scavenge air ports 7 located in an airbox, which from a scavenge air receiver 9 (Fig. 1), is supplied with scavenge air pressurized by a turbocharger 10 (Fig. 1).

The engine is fitted with one or more turbochargers 10 arranged on the aft end of the engine for 4-9 cylinder engines and on the exhaust side for 10 or more cylinder engines.

The air intake to the turbocharger 10 takes place directly from the engine room through an intake silencer (not shown) of the turbocharger. From the turbocharger 10, the air is led via a charging air pipe (not shown), air cooler (not shown) and scavenge air receiver 9 to the scavenge ports 7 of the cylinder liners 6.

The engine is provided with electrically-driven scavenge air blowers (not shown). The suction side of the blowers is connected to the scavenge air space after the air cooler. Between the air cooler and the scavenge air receiver, non-return valves (not shown) are fitted which automatically close when the auxiliary blowers supply the air. The auxiliary blowers assist the turbocharger compressor at low and medium load conditions.

An exhaust valve 11 is mounted centrally in the top of the cylinder in a cylinder cover 12. At the end of the expansion stroke the exhaust valve 11 opens before the engine piston 13 passes down past the scavenge air ports 7, whereby the combustion gases in the combustion chamber 15 above the piston 13 flow out through an exhaust passage 16 opening into an exhaust receiver 17 and the pressure in the combustion chamber 15 is relieved. The exhaust valve 11 closes again during the upward movement of the piston 13. The exhaust valve 11 is hydraulically activated.

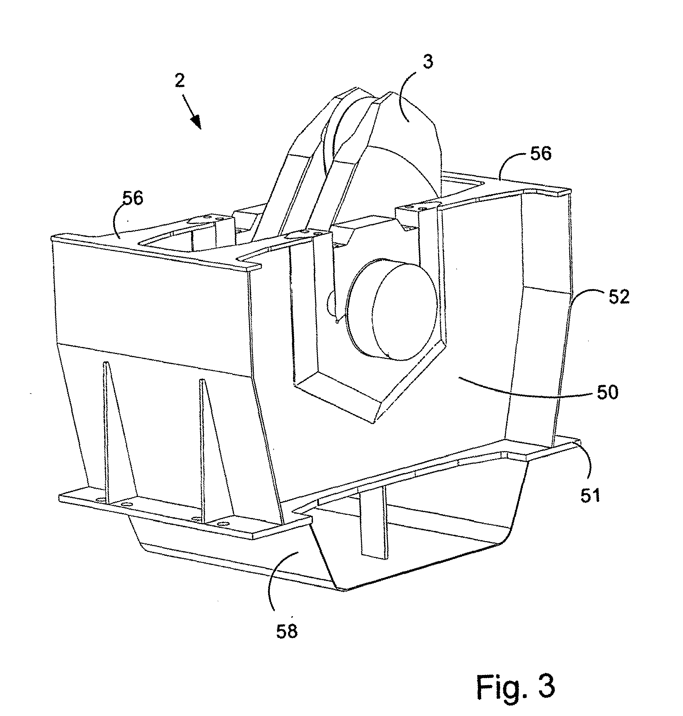

Fig. 3 shows bedplate 2 with the crankshaft 3 in greater detail. The bedplate 2 includes a plurality of cross girders 50 that extend between sidewalls 52 and are connected to the latter by welding. A footflange 51 is welded to the bottom of the transverse girders 50 to the cross girders 50 and to the sidewalls 52. Two top flanges 56 extend along each side of the top of the bedplate 2 and are connected to the sidewalls 52 and the cross girders 50 by welding. The oil pan 58 is welded to the bottom flange 51.

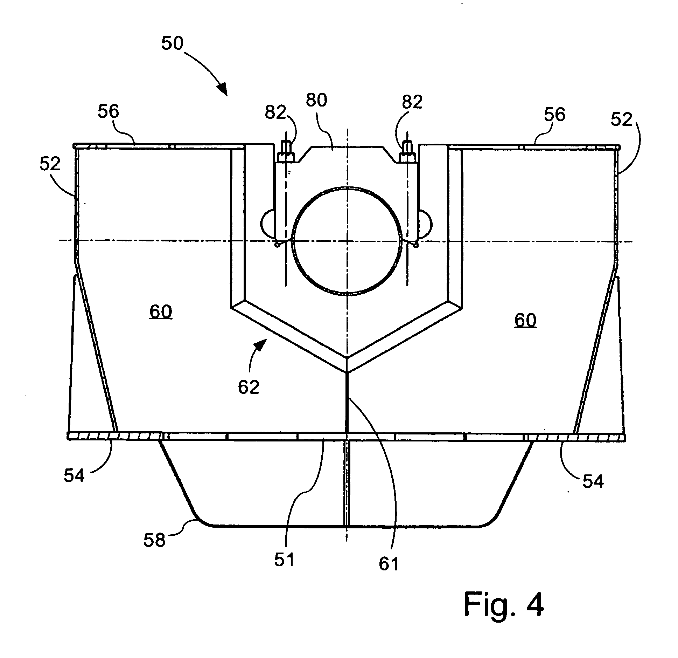

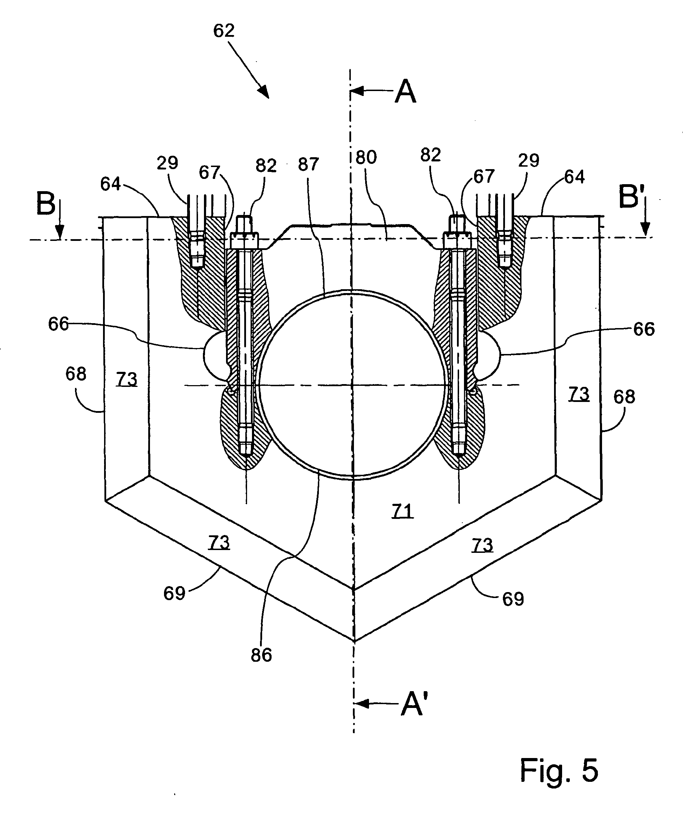

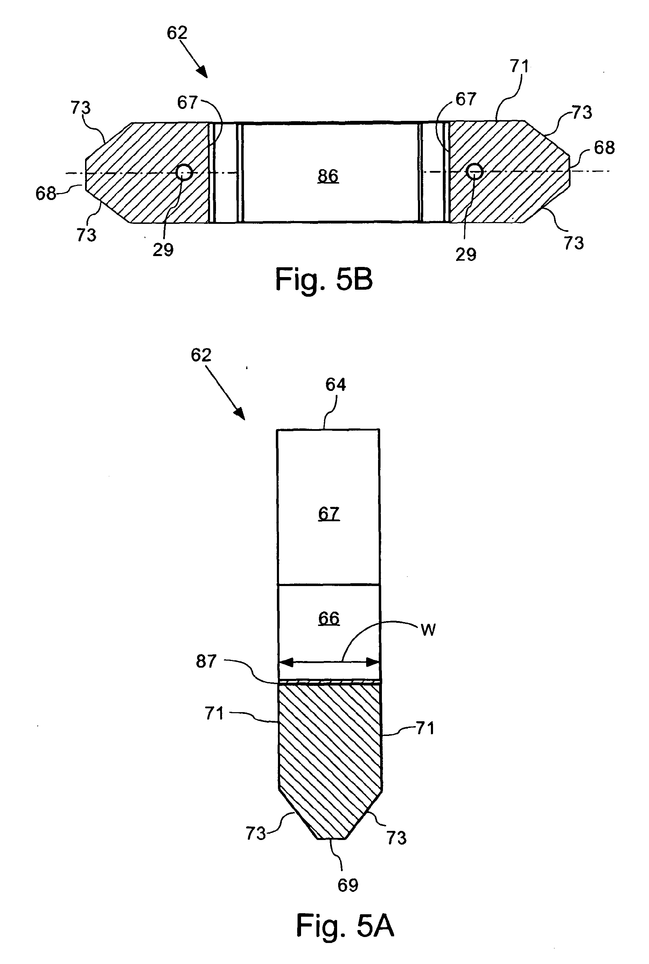

Fig. 4 shows a cross girder in greater detail and Figs. 5,5A and 5B show the main bearing support in even greater detail (the cross sectional Figs. 5A and 5B do not show the bearing cap). The cross girder 50 comprises two webplates 60 and a main bearing support 62. The outer sides of the two webplates 60 are welded to the sidewalls 52, whereas a portion of the inner sides of the two webplates 60 are welded to one another along weld line 61, whilst other portions of the inner sides of the two webplates 60 are welded to the main bearing support 62 at vertical attachment surface 68 and slanting attachment surfaces 69. The vertical- and slanting attachments sides 68,69 of the main bearing support 62 and/or the inner sides of the webplates 60 are sharpened to enable K- or X-welds in which the steel of the webplates 60 is melted over the complete thickness of the webplate to assure a high-quality and reliable weld connection.

The main bearing support 62 is provided with an upwardly facing recess, at the bottom of which is provided an arc shaped support surface on which the lower bearing shell 86 is placed (the lower bearing shell is preferably of the thin shell type, formed by a steel plate with bearing metal deposited thereon). The upwardly facing recess opens to the top surface 64 of the main bearing support. Threaded bores for receiving the stay bolts 29 are provided in the top surface 64 at either side of the upper reopening recess. The upwardly facing recess is also provided with guide surfaces 67 for guiding a bearing cap 80. The bearing cap 80 is provided with an arc shaped support surface for the upper bearing shell 87, which is also of the thin shell type, formed by a steel plate with bearing metal deposited thereon. The bearing cap 80 is held in place by hydraulically tensioned bolts 82 that are anchored in threaded bores that are provided in the body of the main bearing support 62.

A stress relief arc 66 is provided at the transition from the support surfaces 67 to the lower part of the upwardly facing recess.

The main bearing support 62 comprises a front surface 71 and an oppositely disposed rear surface 71, whereby the terms "from" and "rear" have been used arbitrarily. The peripheral portions of the, preferably substantially planar, front and rear surfaces 71 taper towards the narrower connecting sides 68,69. These tapered portions 73 serve to provide a relatively smooth force transmission from the relatively thick main bearing support 62 to the relatively thin webplates 60. There is a sharp transition between the substantially plainer front and rear surfaces 71 and the tapered portions 73. It is however noted that the main bearing support 62 could according to a not shown variation of the preferred embodiment also be realized without the taped portions, in which case the maximum load level should be slightly reduced.

The main bearing support 62 is made from a single solid slab or plate of rolled steel material, preferably a high grade steel. The contours of the main bearing support as defined by the vertical attachment sides 68, the slanting attachments sides 69 and the tapered portions 73 are obtained by flame cutting or by abrasive jet machining. The surface quality and the dimensional accuracy of the cuts obtained by these methods is not very high but is sufficient for the surfaces and/or sides mentioned. The top surface 64 and the upwardly opening recess may also initially be cut by flame cutting or abrasive jet machining, and thereafter machined on a milling machine to obtain the required precise geometry for these surfaces of the main bearing support 62.

The thickness of the slab or plate from which the main bearing support 62 is manufactured, can be selected to be equal or slightly less than the width "W" of the lower bearing shell 86. Thus, the width of the arc shaped support surface or main bearing saddle is correct without the need for machining the side surfaces 71 (the width, being the extension of the component concern in the longitudinal direction of the crankshaft/engine).

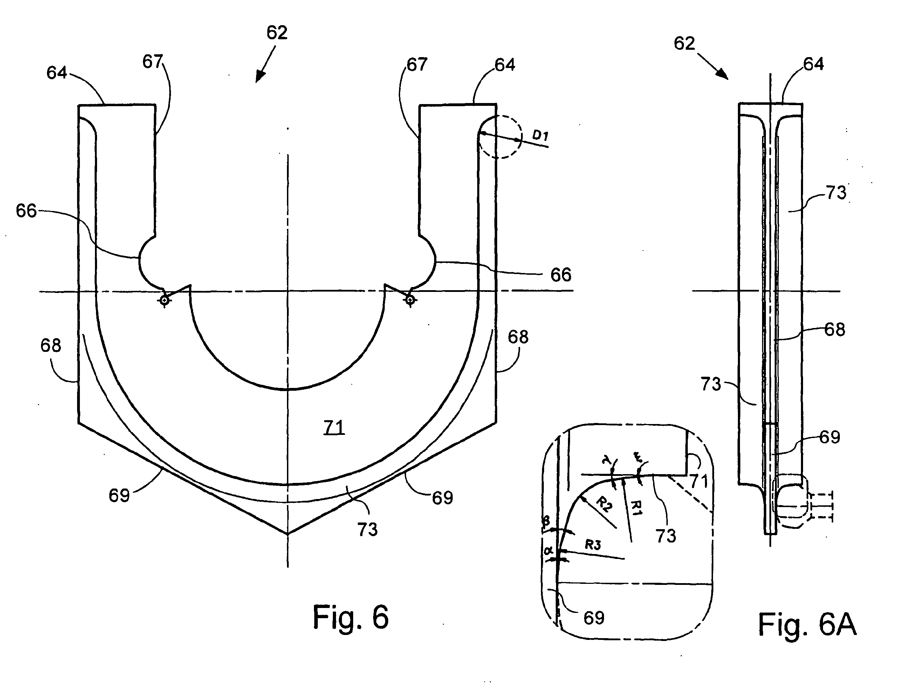

Figs. 6 and 6A illustrate another embodiment of the main bearing support 62 according to the invention. In this embodiment the three tapered portions 73 are reduced to one curved "U" shaped surface without sharp transitions from the vertical portions to the slanting portions. Further, the tapered portion is curved in a second direction, as is indicated by the radii R1,R2 and R3 in the enlarged detail in Fig. 6A. Both curvatures serve to reduce the notch effects at transitions in angle or thickness of the main bearing support 62.

Fig. 6A illustrates a tool 110 (indicated by interrupted lines) that can be used to create a smooth transition of the thickness of the main bearing support to the smaller thickness of the webplates 60. The tool is a miller cutter which the three Radii R1,R2 and R3 and straight transitional areas connecting the Radii disposed at predetermined angles α,β,γ and ξ. The tapered portions 73 are provided with a curvature with a diameter D1 at the top of the main bearing support to provide a smooth transition between the tapered portions 73 and the top flange 56 of the bedplate 2.

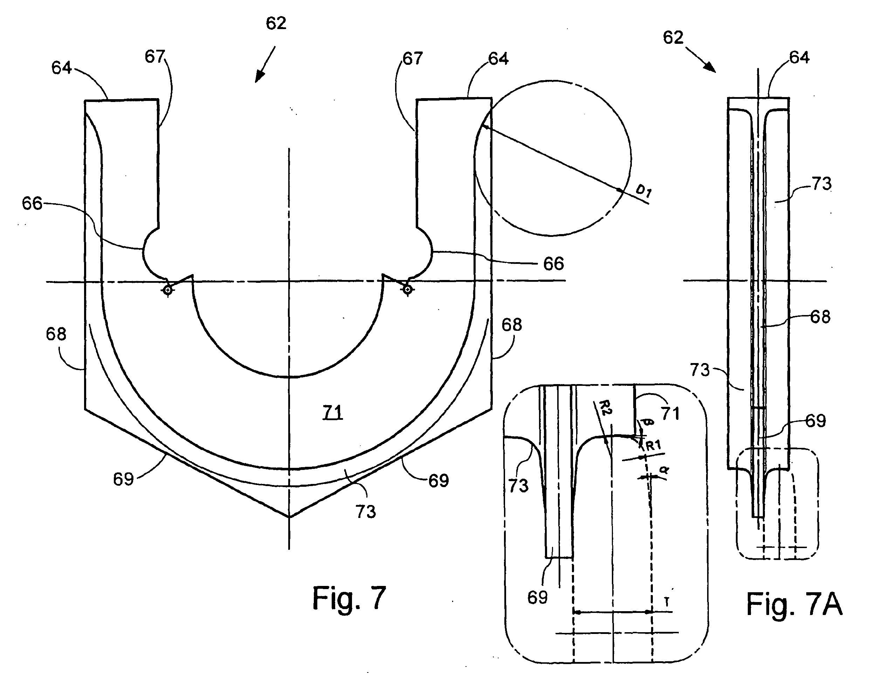

Figs. 7 and 7A illustrate another embodiment of the main bearing support 62 according to the invention. This embodiment is substantially identical to the embodiment of Fig. 6 and 6A, except that the miller cutter that is used for creating the curvature in the tapered portion 73 has another shape. This tool allows to radii R1 and R2 to be realized with transitional straight connection portions arranged at angles α and β. Further, the diameter D1 of the upper curvature of the tapered portions 73 and has been chosen to be larger.

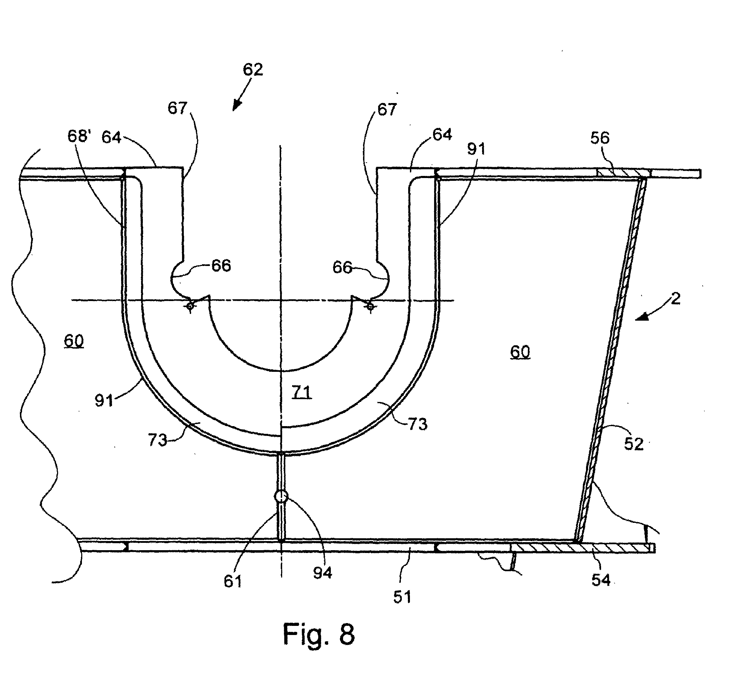

Fig. 8 illustrates yet another embodiment of the main bearing support 62 according to the invention in two variations (the one variation being disclosed on left side of the vertical symmetry line and the other variation being disclosed on the right side of the vertical symmetry line - the only difference is between the two variations being the geometry of the tapered portions 73). This embodiment is substantially identical to the embodiment illustrated in figures 6 and 7, except that there is only one single curved "U"-shaped connecting surface 68' as opposed to two vertical connecting surfaces 68 and two slanting connecting surfaces 69. This curvature in the connecting surface 68' reduces the notch effect at the transition from the main bearing support 62 to the webplates 60, and will therefore allow higher loads, be it at the cost of an increased difficulty of manufacturing exactly matching connection surfaces of the main bearing support 62 and of the webplates 60. The connection between the connection surfaces 68' and the webplates 60 is realized by a K- or X-weld 91. This embodiment also shows a carrying hole 94 that is used to engage the transverse girder for lifting and transport purposes during the manufacturing process.

The attachment sides 68,69 extend in the embodiment shown above along straight lines, i.e. the attachments sides are substantially planar. This feature greatly facilitates realization in production of the required geometry of the main bearing support 62 and of the sides of the webplates 60. However, according to another this embodiment shown in Fig. 8 the attachments sides are curved, for example to reduce notch factors.

Further, the main bearing support has been illustrated in the preferred embodiment above with two slanting bottom attachment surfaces 69. According to a variation of this preferred embodiment (not shown), the main bearing support may be provided with one single straight or curved bottom attachment surface. According to another variation (not shown), the main being support may have two vertical connection surfaces, one horizontal connection surface at the bottom of the main bearing support and two slanting connection surface that connect the two vertical connection surfaces to the horizontal surface.

The term "comprising" as used in the claims does not exclude other elements or steps. The term "a" or "an" as used in the claims does not exclude a plurality.

The reference signs used in the claims shall not be construed as limiting the scope.

## Claims

1. A large two-stroke diesel engine (1) of the crosshead type comprising a bedplate (2), a frame box (4) mounted on the bedplate (2), a cylinder frame (5) mounted on the frame box (4), a crankshaft (3) resting in main bearings, wherein the bedplate (2) is provided with a plurality of cross girders (50), at least some of said cross girders (50) comprise one or more webplates (60) and a main bearing support (62) connected to the one or more webplates (60) by welds, said main bearing support (62) including a rolled steel slab or plate with an arc shaped support surface for carrying the lower bearing shells thereon.

2. An engine according to claim 1, wherein the main bearing support (62) is machined from a single solid slab or plate.

3. An engine according to claim 1 or 2, wherein said slab or plate has an upper side that is provided with a recess at the bottom of which said arc shaped support surface is disposed, an oppositely disposed front and rear side (71) and one or more attachment sides (68, 69) that are connected to the one or more webplates (60).

4. An engine according to claim 3, wherein the one or more attachment sides (68, 69) extend along substantially straight lines

5. An engine according to any of claims 3 to 4, wherein at least a peripheral portion of the front side and the rear side (71) tapers towards the one or more attachment sides.

6. An engine according to claim 5, wherein the nonperipheral portion of the front side and the rear side (71) is substantially planar, and wherein there is a sharp transition between the planar portion and the tapered portion of the front and rear side (71).

7. An engine according to any of claims 2 to 6, wherein the welds between the slab or plate and the webplates are K- or X-welds.

8. An engine according to any of claims 3 to 7, wherein two of the attachment sides (68) extend substantially vertically, and two further attachment sides (69) slant downwardly towards one another from the lower ends of the two vertically extending attachment sides.

9. An engine according to claim 8, wherein said slanting attachment sides meet one another.

10. A method for manufacturing a cross girder (50) of a bedplate (2) of a large two-stroke diesel engine (1) of the crosshead type, comprising the steps of: providing a rolled steel slab or plate, machining an arc shaped support surface in said slab or plate for carrying a lower shell of the main bearings of the engine, providing one or more webplates (60), and connecting the slab or plate to said one or more webplates by welding.

11. A method to according to claim 10, comprising the step of cutting at least a portion of the contour of said plate or slab by flame cutting or by abrasive jet machining.

12. A method according to claim 10, comprising the step of creating tapered portions in the peripheral area of the sides of the slab or plate that are connected to the webplates.

13. A method to according to claim 12, wherein the contour of said tapered portions is created by flame cutting or by abrasive jet machining.

14. A method according to any of claims 10 to 13, comprising the step of providing said steel slab or plate rolled to a thickness that corresponds to the width of the lower shell.

## Patentansprüche

1. Großer Zweitakt-Dieselmotor (1) vom Kreuzkopf-Typ, umfassend eine Grundplatte (2), einen Gehäusekasten (4), der an der Grundplatte (2) montiert ist, ein Zylindergehäuse (5), das an dem Gehäusekasten (4) montiert ist, eine Kurbelwelle (3), die in Hauptlagern ruht, wobei die Grundplatte (2) mit einer Mehrzahl von Querträgern (50) versehen ist, wobei zumindest manche der Querträger (50) ein oder mehrere Stegbleche (60) und eine Hauptlagerabstützung (62) umfassen, die mit dem einen oder den mehreren Stegblechen (60) durch Schweißnähte verbunden ist,
wobei die Hauptlagerabstützung (62) eine Walzstahltafel oder -platte mit einer bogenförmigen Abstützungsfläche zum Tragen der unteren Lagerschalen darauf umfasst.

2. Motor nach Anspruch 1,
wobei die Hauptlagerabstützung (62) aus einer einzigen massiven Tafel oder Platte bearbeitet ist.

3. Motor nach Anspruch 1 oder 2,
wobei die Tafel oder Platte eine obere Seite, die mit einer Ausnehmung versehen ist, an deren Boden die bogenförmige Abstützungsfläche angeordnet ist, eine entgegengesetzt angeordnete vordere und hintere Seite (71) und ein oder mehrere Anbringungsseiten (68, 69) aufweist, die mit dem einen oder den mehreren Stegblechen (60) verbunden sind.

4. Motor nach Anspruch 3,
wobei sich die eine oder die mehreren Anbringungsseiten (68, 69) entlang im Wesentlichen geraden Linien erstrecken.

5. Motor nach einem der Ansprüche 3 bis 4,
wobei zumindest ein Umfangsabschnitt der vorderen Seite und der hinteren Seite (71) in Richtung der einen oder der mehreren Anbringungsseiten abgeschrägt ist.

6. Motor nach Anspruch 5,
wobei der Nichtumfangsabschnitt der vorderen Seite und der hinteren Seite (71) im Wesentlichen planar ist, und wobei es einen scharfen Übergang zwischen dem planaren Abschnitt und dem abgeschrägten Abschnitt der vorderen und hinteren Seite (71) gibt.

7. Motor nach einem der Ansprüche 2 bis 6,
wobei die Schweißnähte zwischen der Tafel oder Platte und den Stegblechen K- oder X-Schweißnähte sind.

8. Motor nach einem der Ansprüche 3 bis 7,
wobei sich zwei der Anbringungsseiten (68) im Wesentlichen vertikal erstrecken, und zwei weitere Anbringungsseiten (69) in Richtung nach unten aufeinander zu von den unteren Enden der zwei sich vertikal erstreckenden Anbringungsseiten geneigt sind.

9. Motor nach Anspruch 8,
wobei sich die geneigten Anbringungsseiten treffen.

10. Verfahren zum Herstellen eines Querträgers (50) einer Grundplatte (2) eines großen Zweitakt-Dieselmotors (1) vom Kreuzkopf-Typ, das die Schritte umfasst, dass:
eine Walzstahltafel oder -platte bereitgestellt wird, eine bogenförmige Abstützungsfläche in der Tafel oder Platte zum Tragen einer unteren Schale des Hauptlagers des Motors bearbeitet wird, ein oder mehrere Stegbleche (60) vorgesehen werden, und die Tafel oder Platte mit dem einen oder den mehreren Stegblechen durch Schweißen verbunden wird.

11. Verfahren nach Anspruch 10,
das den Schritt umfasst, dass zumindest ein Abschnitt der Kontur der Platte oder der Tafel durch Brennschneiden oder durch Abrasivstrahlbearbeiten geschnitten wird.

12. Verfahren nach Anspruch 10,
das den Schritt umfasst, dass verjüngte Abschnitte in dem Umfangsbereich der Seiten der Tafel oder Platte erzeugt werden, die mit den Stegblechen verbunden werden.

13. Verfahren nach Anspruch 12,
wobei die Kontur der verjüngten Abschnitte durch Brennschneiden oder durch Abrasivstrahlbearbeiten erzeugt wird.

14. Verfahren nach einem der Ansprüche 10 bis 13,
das den Schritt umfasst, dass die Stahltafel oder -platte auf eine Dicke gewalzt bereitgestellt wird, die der Breite der unteren Schale entspricht.

## Revendications

1. Grand moteur diesel à deux temps (1) de type à crosse comportant une plaque d'appui (2), un caisson (4) monté sur la plaque d'appui (2), un bâti-cylindre (5) monté sur le caisson (4), un vilebrequin (3) reposant sur des paliers principaux, dans lequel la plaque d'appui (2) comporte une pluralité de traverses (50), au moins certaines des traverses (50) comprennent une ou plusieurs âmes pleines (60) et un support des paliers principaux (62) connecté à la ou les âmes pleines (60) au moyen de soudures, le support des paliers principaux (62) comprenant une plaque ou brame en acier laminé présentant une surface de support en forme d'arc afin de supporter les coussinets inférieurs de paliers.

2. Moteur selon la revendication 1, dans lequel le support des paliers principaux (62) est usiné à partir d'une seule plaque ou brame solide.

3. Moteur selon la revendication 2, dans lequel la plaque ou brame présente un côté supérieur présentant un évidement en bas duquel la surface de support en forme d'arc est disposée, un côté avant et un côté arrière disposés à l'opposé (11) et un ou plusieurs côtés de fixation (68, 69) connectés à la ou les âmes pleines (60).

4. Moteur selon la revendication 3, dans lequel le ou les côtés de fixation (68, 69) s'étendent le long de lignes sensiblement droites.

5. Moteur selon l'une quelconque des revendications 3 à 4, dans lequel au moins une partie périphérique du côté avant et du côté arrière (71) se resserre en allant vers le ou les côtés de fixation.

6. Moteur selon la revendication 5, dans lequel la partie non périphérique du côté avant et du côté arrière (71) est sensiblement planaire, et dans lequel une transition prononcée existe entre la partie planaire et la partie resserrée du côté avant et du côté arrière (71).

7. Moteur selon l'une quelconque des revendications 2 à 6, dans lequel les soudures entre la plaque ou brame et les âmes pleines sont des soudures en K ou en X.

8. Moteur selon l'une quelconque des revendications 3 à 7, dans lequel deux des côtés de fixation (68) s'étendent sensiblement verticalement, et deux autres côtés de fixation (69) s'inclinent vers le bas, l'un vers l'autre, à partir des extrémités inférieures des deux côtés de fixation s'étendant verticalement.

9. Moteur selon la revendication 8, dans lequel les côtés de fixation inclinés se rejoignent.

10. Procédé de fabrication d'une traverse (50) d'une plaque d'appui (2) d'un grand moteur diesel à deux temps (1) de type à crosse, comprenant des étapes consistant à : prévoir une plaque ou brame en acier laminé, usiner une surface de support en forme d'arc dans la plaque ou brame afin de supporter le coussinet inférieur des paliers principaux du moteur, prévoir une ou plusieurs âmes pleines (60), et connecter la plaque ou brame à la ou les âmes pleines au moyen d'une soudure.

11. Procédé selon la revendication 10, comprenant une étape consistant à couper au moins une partie du contour de la plaque ou brame par coupage au chalumeau ou par usinage au jet d'eau abrasif.

12. Procédé selon la revendication 10, comprenant une étape consistant à créer des parties resserrées dans la zone périphérique des côtés de la plaque ou brame qui sont connectés aux âmes pleines.

13. Procédé selon la revendication 12, dans lequel le contour des parties resserrées est créé par coupage au chalumeau ou par usinage au jet d'eau abrasif.

14. Procédé selon l'une quelconque des revendications 10 à 13, comprenant une étape consistant à prévoir la plaque ou brame en acier laminé de telle sorte qu'elle présente une épaisseur correspondant à la largeur du coussinet inférieur.
